(19) Europäisches Patentamt
European Patent Office
Office européen des brevets

(11) **EP 2 356 413 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(21) Anmeldenummer: **09795307.9**

(22) Anmeldetag: **09.11.2009**

(51) Int Cl.:
*G01J 3/45* *(2006.01)*      *G01S 17/95* *(2006.01)*

(86) Internationale Anmeldenummer:
**PCT/DE2009/001561**

(87) Internationale Veröffentlichungsnummer:
**WO 2010/054625 (20.05.2010 Gazette 2010/20)**

(54) **VERFAHREN UND VORRICHTUNG ZUM FESTSTELLEN VON LAGE, RADIUS UND/ODER FORMABWEICHUNG EINER RINGARTIGEN STRUKTUR**

METHOD AND DEVICE FOR DETERMINING THE POSITION, RADIUS AND/OR DEVIATION IN FORM OF AN ANNULAR STRUCTURE

PROCÉDÉ ET DISPOSITIF DE DÉTERMINATION DE LA POSITION, DU RAYON ET/OU D'UN ÉCART DE FORME D'UNE STRUCTURE ANNULAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.11.2008 DE 102008056869**

(43) Veröffentlichungstag der Anmeldung:
**17.08.2011 Patentblatt 2011/33**

(73) Patentinhaber: **Airbus Defence and Space GmbH 85521 Ottobrunn (DE)**

(72) Erfinder: **SCHERTLER, Klaus 85748 Garching (DE)**

(74) Vertreter: **Flügel Preissner Kastel Schober Patentanwälte PartG mbB Nymphenburger Strasse 20a 80335 München (DE)**

(56) Entgegenhaltungen:
**WO-A1-2004/092767      DE-B3-102006 030 399 US-A- 5 613 013      US-A1- 2004 027 537**

EP 2 356 413 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Bildverarbeitung von eine ringartige Struktur aufweisenden Intensitätsbildern, insbesondere zur Bearbeitung von Interferogrammen.

Diese Erfindung beschäftigt sich mit der gleichen grundlegenden Problemstellung wie das Verfahren und die Vorrichtung, die in der DE 10 2006 030 399 B3 offenbart sind. Eines der Ziele ist es, z.B. durch genaue Messung von Ringradien in Interferogrammen Rückschlüsse über extrem kleine Wellenlängenänderungen zu gewinnen.

Es sind verschiedene spektroskopische Messmethoden bekannt, bei welchen durch Auswertung von unter Verwendung einer optischen Strahlung erzeugten Interferogrammen beispielsweise minimale Längen- oder Wellenlängenänderungen quantitativ bestimmt werden. Zum Beispiel zeigen solche Interferogramme ringförmig angeordnete Intensitätsextrema, beispielsweise Intensitätsmaxima und Intensitätsminima von Fabry-Perot-Interferenzbildern.

In der DE 10 2006 030 399 B3 sind ein Verfahren und eine Vorrichtung offenbart, mit welchen eine schnelle Auswertung solcher ringförmige Strukturen aufweisenden Intensitätsbildern ermöglicht wird. Damit kann man beispielsweise an Bord von Luftfahrzeugen auf das Luftfahrzeug einwirkende Böen schnell erfassen. Mit dem bekannten Verfahren und der bekannten Vorrichtung kann man ein Interferogramm derart vermessen, dass eine schnelle und genaue Erfassung der Lage der Intensitätsextrema möglich ist. Insbesondere ist mit diesem Verfahren ein Ringradius eines ringförmigen Intensitätsextremums in einem Interferogramm ermittelbar.

Ein Nachteil des aus der DE 10 2006 030 399 B3 bekannten Verfahrens besteht darin, dass zur Bestimmung der Ringradien zuvor die Lage des Ringzentrums (Mittelpunkt) bekannt sein muss. Die Lage des Ringzentrums ist aber im allgemeinen nicht oder nur unzureichend genau bekannt (z.B. durch Drift des Ringzentrums nach Kalibration). Ein weiterer Nachteil von der in der DE 10 2006 030 399 B3 beschriebenen Methodik besteht darin, dass eine eventuell (z.B. durch dekalibrierte Optik) vorhandene leichte Ellipsität der Ringmuster des Inteferenzbildes nicht erfasst wird und daher nicht nutzbringend in das Verfahren (z.B. korrigierend in die Bestimmung der Ringradien oder zum Start einer Neukalibration) eingeht. Abweichungen der Lage des Ringzentrums oder der Form der ringartigen Struktur von einer Kreisform können bei dem bekannten Verfahren zu Ungenauigkeiten führen. Mit anderen Worten arbeitet das bekannte Verfahren nur unter bestimmten Umständen mit der erwünschten Präzision.

Aufgabe der Erfindung ist es, ein Verfahren und eine Vorrichtung zur Bildverarbeitung von eine ringartige Struktur aufweisenden Intensitätsbildern zwecks Vermessung der Lage und/oder des Radius der ringartigen Struktur derart zu verbessern, dass sie genauer arbeiten und universeller einsetzbar sind.

Diese Aufgabe wird durch ein Verfahren und eine Vorrichtung mit den Merkmalen der beigefügten unabhängigen Patentansprüche gelöst.

Vorteilhafte Ausgestaltungen der Erfindung sind Gegenstand der Unteransprüche.

Die Erfindung schafft ein Verfahren zur Bildverarbeitung von eine ringartige Struktur aufweisenden Intensitätsbildern zwecks Vermessung von Lage, Formabweichung und/oder Radius der ringartigen Struktur, insbesondere zur Auswertung von Interferogrammen und/oder zur genauen Ortsbestimmung von Objekten, mit den Schritten:

   a) Definieren von N Sektoren des Intensitätsbildes mit jeweils an einem gemeinsamen, näherungsweise festgelegten Sektorursprungspunkt innerhalb der ringartigen Struktur liegenden Sektor-Spitzen, wobei N eine natürliche Zahl mit N>1 ist;

   b) Erfassen einer Distanz eines Intensitätsextremums zu der jeweiligen Sektor-Spitze jedes Sektors wenigstens einer Gruppe der Sektoren, um einen Distanzvektor zu erhalten, der die Distanzen aus allen Sektoren wenigstens der Gruppe der Sektoren enthält;

   c) Durchführen einer Fourier-Transformation des Distanzvektors zur Bildung eines ersten Fourier-Vektors $V=(v_0,v_1,...,v_{n-1})$; und

   d) Ermitteln

      d1) eines Zentrums der ringartigen Struktur

   unter Verwendung der Komponente $v_1$ des durch die Fourier-Transformation erhaltenen Fourier-Vektors V.

Bevorzugt umfasst der Schritt d) weiter das Ermitteln

   d2) eines Radius der ringartigen Struktur und/oder
   d3) einer Abweichung der ringartigen Struktur von einer Kreisform

aus dem durch die Fourier-Transformation erhaltenen Fourier-Vektor, um die Formabweichung und/oder den Radius der ringartigen Struktur zu erhalten.

Mit dem geschilderten Verfahren lässt sich gemäß einer bevorzugten Verwendung insbesondere auch das Problem der schnellen und genauen algorithmischen Erfassung von Ringradien in Fabry-Perot-Interferogrammen bei ungenau bekanntem Ringzentrum und eventuell vorhandener unbekannter Ringellipsität lösen.

Weiter wird eine simultane Bestimmung von Ringradius, Ringzentrum und Ringellipsität von ringartigen Strukturen in Intensitätsbildern innerhalb einer einheitlichen Methodik ermöglicht.

Mit dem dargestellten Verfahren sowie der offenbarten Vorrichtung zur Durchführung des Verfahrens lassen sich ein Verfahren bzw. eine Vorrichtung zur simultanen Erfassung von Ringzentren, Ringradien und Ringellipsitäten schaffen.

Allgemein wird damit auch eine genauere Vermessung der ringartigen Strukturen ermöglicht, da Abweichungen der Lage des Ringzentrums und/oder Formabweichungen der ringartigen Struktur von einer idealen Kreisform erfassbar und damit auch bei der Vermessung der Lage und/oder des Radius der ringartigen Struktur korrigierbar sind.

Hierzu werden zunächst mehrere Sektoren in dem Intensitätsbild mit jeweils gleichem Sektorursprung definiert. Beispielsweise wird das Intensitätsbild in mehrere Sektoren aufgeteilt. Es sind aber auch überlappende Sektoren oder zueinander in Umfangsrichtung beabstandete Sektoren denkbar.

Sodann wird die Lage eines Intensitätsextremums zu der jeweiligen Sektorspitze für jeden oder eine Gruppe der Sektoren erfasst. Hierzu kann generell das Verfahren zur Erfassung der Lage von Intensitätsextrema angewandt werden, wie es in der DE 10 2006 030 399 B3, auf die für weitere Einzelheiten ausdrücklich verwiesen wird, beschrieben ist. Es sind aber auch andere Verfahren zur Erfassung der Lage von Intensitätsextrema einsetzbar.

Anschließend wird eine Fourier-Transformation an dem so erhaltenen Distanzvektor, der als Komponenten die einzelnen Distanzen der Intensitätsextrema in den einzelnen Sektoren zu der jeweiligen Sektorspitze enthält durchgeführt.

Der durch die Fourier-Transformation erhaltene Fourier-Vektor kann dann zur Bestimmung der Lage des Ringzentrums und/oder zur Bestimmung einer Formabweichung, insbesondere einer Ellipsität und/oder zur Bestimmung des Ringradius herangezogen werden. Dieser Fourier-Vektor, der durch Fourier-Transformation aus dem Distanzvektor erhalten wird, wird hier als "erster Fourier-Vektor" bezeichnet, während der beim Durchführen des Verfahrens gemäß DE 10 2006 030 399 B3 aus einem 1D-Intensitätsvektor erhaltene Fourier-Vektor, der bei einer vorteilhaften Ausgestaltung der Erfindung zur Bestimmung der Lage des Intensitätsextremums von der jeweiligen Sektorspitze herangezogen wird, als "zweiter Fourier-Vektor" bezeichnet wird.

Gemäß einer vorteilhaften Ausgestaltung der Erfindung umfasst Schritt a):

    a1) Aufteilen eines gegebenen intensitätsbildes, insbesondere Interferogramm-Bildes, in N radiale Bildsektoren und/oder

    a2) Fortlaufendes Zuweisen einer fortlaufenden Sektornummer n mit n = 0...N-1 zu benachbarten Sektoren

und/oder im Fall eines nicht genau bekannten Zentrums der Ringstruktur:

    a3) Festlegen eines näherungsweisen Ringzentrums als gemeinsamen Sektorursprung $(cx_0, cy_0)$ der radialen Sektoren, der die jeweiligen Sektor-Spitzen bildet.

Durch das Aufteilen des Bildes in radiale Bildsektoren werden die gesamten Bildinformationen herangezogen, was zur Erhöhung der Genauigkeit beiträgt.

Durch das Zuteilen von Sektornummern lässt sich die Zuordnung bei der Berechnung erleichtern; außerdem ist so die relative Lage der Sektoren zueinander erkennbar.

Durch das Festlegen eines näherungsweisen Ringzentrums erhält man einen Ausgangspunkt für das Verfahren, der sich nach Durchführen des Verfahrens entsprechend der festgestellten Lage des Ringzentrums korrigieren lässt.

Wie dies grundsätzlich aus der DE 10 2006 030 399 B3 bekannt ist, wird zur Bestimmung der Distanz in Schritt b) bevorzugt durch Durchführung der folgenden Unterschritte vorgegangen:

    b1) Erzeugung eines 1-dimensionalen Intensitätsvektors aus dem 2-dimensionalen Interferogramm des jeweiligen Sektors durch 2D-1 D-Transformation, die derart gewählt ist, dass in dem 2-dimensionalen Interferogramm vorhandene Intensitätsextrema äquidistant in dem 1-dimensionalen Intensitätsvektor erscheinen;

    b2) Durchführen einer Fourier-Transformation an dem 1-dimensionalen Intensitätsvektor;

    b3) Ermitteln von Frequenz- und/oder Phasenlage der dominanten Frequenz aus dem durch die Fourier-Transformation des 1-dimensionalen Intensitätsvektors erhaltenen zweiten Fourier-Vektor sowie

    b4) Ermitteln der Distanz des jeweiligen Intensitätsextremums von der Sektor-Spitze in dem Sektor durch Rückrechnung der Frequenz und der Phasenlage der dominanten Frequenz von dem Frequenzraum in dem Ortsraum.

Dies hat die in der DE 10 2006 030 399 B3 beschriebenen Vorteile einer schnellen und genauen Lagebestimmung und damit Distanzbestimmung, die sich einfach mit Standardhardware (oder mit mit Standarmethoden programmierter Software) durchführen lässt.

Gemäß einer vorteilhaften Ausgestaltung der Erfindung ist vorgesehen, dass Schritt c) umfasst:

Überführen des Distanzvektors $D = (d_0, d_1, ..., d_{N-1})$ durch diskrete Fourier-Transformation in einen komplexzahligen Fourier-Vektor $V = (v_0, v_1, ..., v_{N-1})$, wobei sich die Werte des Fourier-Vektors aus den Werten des Distanzvektors durch die Definition der diskreten Fourier-Transformation ergeben als:

$$v_k = \frac{1}{N}\sum_{n=0}^{N-1} d_n\, e^{-i\,2\pi k \frac{n}{N}} \qquad \text{mit } k = 0\ldots N\text{-}1,$$

wobei N die Anzahl der Sektoren darstellt.

Vorzugsweise wird die Lage des Ringzentrums aus der Komponente $v_1$ des so ermittelten ersten Fourier-Vektors bestimmt.

In konkreter bevorzugter Ausgestaltung werden die Koordinaten cx, cy des Ringzentrums durch:

$$cx = cx_0 + 2\, Re(v_1)$$

und

$$cy = cy_0 + 2\, Im(v_1),$$

bestimmt, wobei

$cx_0, cy_0$     Koordinaten eines in Schritt a) festgelegten gemeinsamen Sektorursprungs,
$Re(v_1)$     der Realanteil der komplexen Zahl $v_1$ und
$Im(v_1)$     der Imaginäranteil der komplexen Zahl $v_1$

darstellen.

Weiter bevorzugt wird ein Ringradius der ringartigen Struktur aus der Fourier-Vektorkompenente $v_0$ oder aus der Fourier-Vektorkompenente $v_0$ und wenigstens einer der Fourier-Vektorkomponenenten $v_1$ und $v_2$ ermittelt.

Gemäß einer bevorzugten Ausgestaltung ist dabei vorgesehen, dass ein mittlerer Radius durch den Betrag $|v_0|$ der Fourier-Vektorkompenente $v_0$ bestimmt wird und durch wenigstens eine der weiteren Fourier-Vektorkomponente korrigiert wird.

In einer bevorzugten Vorgehensweise wird der Radius der ringartigen Struktur aus den Fourier-Vektor-Komponenten $v_0$, $v_1$ und $v_2$ errechnet durch:

$$R(v_0, v_1, v_2) = |v_0|\cdot\left(1 + \left(\frac{|v_1|}{|v_0|}\right)^2 + \left(\frac{|v_2|}{|v_0|}\right)^2\right).$$

Vorzgusweise wird aus wenigstens einer Komponente des ersten Fourier-Vektors eine Ellipsität der ringartigen Struktur als Maß für eine Formabweichung von einer Kreisform ermittelt.

Insbesondere ist bevorzugt, dass die Ellipsität errechnet wird aus der Fourier-Vektorkomponente $v_2$, und insbesondere in Form der numerischen Ellipsität $\varepsilon$ errechnet wird durch

$$\varepsilon = 2\sqrt{2\frac{|v_2|}{|v_0|}}.$$

Ein bevorzugtes Einsatzgebiet des hier beschriebenen Verfahrens ist die Vermessung und/oder Berechnung von Ringradien, Ringzentren und/oder Ringellipsitäten in Fabry-Perot-Interferonmetern. Es sind vorzugsweise die gleichen Verwendungen wie in der DE 10 2006 030 399 B3 vorgesehen.

Besonders bevorzugt ist die Verwendung des Verfahrens in Verfahren und Vorrichtungen zur Erfassung von Böen, wie sie genauer in der WO 2004/092767 A1 beschrieben sind.

Eine bevorzugte Ausgestaltung der Erfindung ist gekennzeichnet durch ein- oder mehrmaliges Wiederholen der Schritte a) bis d1), wobei ein jeweils in dem zuvorigen Durchlauf in Schritt d1) ermitteltes Ringzentrum in dem nächsten Durchlauf als gemeinsamer Sektorursprung für die Sektoren definiert wird. Durch mehrmalige Wiederholung lässt sich das Ringzentrum genauer bestimmen, so dass insgesamt die Genauigkeit erhöht wird.

Anstelle einer Aufteilung des Intensitätsbildes in Sektoren können zum Durchführen des Verfahrens in Schritt a) auch sich überlappende Sektoren definiert werden. Durch eine Überlappung kann man beispielsweise auch bei einer groben Sektorverteilung sicherstellen, dass alle Informationen aus dem Intensitätsbild zur Berechnung herangezogen werden, was die Genauigkeit erhöht.

Wenn die Distanzerfassung gemäß Schritt b) in mehreren Sektoren gleichzeitig durchgeführt wird, lässt sich das Verfahren besonders schnell durchführen.

Auch kann die in der DE 10 2006 030 399 B3 beschriebene Mittelung von Intensitätswerten entlang von Kreiskonturen, die z.B. zur Bestimmung der Lage der Intensitätsextrema durchführbar ist, eingesetzt und unter Verwendung der Ergebnisse des erfindungsgemäßen Verfahrens genauer durchgeführt werden, um so insgesamt die Genauigkeit weiter zu erhöhen. Demnach ist bei einer bevorzugten Ausgestaltung der Erfindung vorgesehen, dass Schritt b) umfasst:

b0) Mittelung von entlang einer bestimmten Kreiskontur mit vorgegebenem Radius $R_L$ oder bestimmten Ellipsenkontur mit vorgegebener Ellipsenhalbachsenlängen erfassten Intensitätswerten. Bevorzugt wird dabei in Schritt b0) bei einem mehrmaligen Durchführen der Schritte a) bis d) eine in einem zuvor durchgeführten Durchlauf der Schritte a) bis d) erfasste Lage und Form, insbesondere Ellipsität, der ringartigen Struktur als Ausgangspunkt zur Mittelung entlang der korrekten Kreis- oder Ellipsenkontur in einem darauffolgenden Durchlauf verwendet.

Mit dem Verfahren lässt sich vorteilhaft auch eine einfache und genaue Kalibrierung einer z.B. zur Durchführung des Verfahrens eingesetzten Bildverarbeitungsvorrichtung durchführen. Hierzu ist gemäß einer bevorzugten Ausgestaltung vorgesehen, dass die in Schritt d) erhaltenen Informationen, insbesondere Lage des Ringzentrums und/oder Ellipsität der Ringstruktur zur Kalibrierung einer Bildbearbeitungsvorrichtung verwendet werden.

Das Verfahren kann zum Bespiel durchgeführt werden:

- zur Erfassung von Längen- oder Wellenlängenänderung,
- an Bord eines Luftfahrzeuges zur Erfassung von Böen oder
- zur Bestimmung der Lageänderung von Objekten, die mit einem Ringmuster versehen sind, wobei das Ringmuster als Bild aufgenommen wird und einer entsprechenden Bildbearbeitung unterzogen wird, um die Lage des Ringmusters und damit die Lage des Objekts zu erfassen.

Die erfindungsgemäße Vorrichtung ist besonders bevorzugt zur Durchführung des erfindungsgemäßen Verfahrens ausgebildet.

Die Erfindung schafft gemäß einem weiteren Aspekt demnach eine Vorrichtung zur Bildbearbeitung von eine ringartige Struktur aufweisenden Intensitätsbildern zwecks Vermessung von Lage, Formabweichung und/oder Radius der ringartigen Struktur, insbesondere zur Bearbeitung von Interferogrammen und/oder zur genauen Ortsbestimmung von Objekten, umfassend:

eine Sektorbildungseinheit zum Definieren von N Sektoren des Intensitätsbildes mit jeweils an einem gemeinsamen, näherungsweise festgelegten Sektorursprungspunkt innerhalb der ringartigen Struktur liegenden Sektor-Spitzen, wobei N eine natürliche Zahl mit N>1 ist;
eine Distanzerfassungseinheit zum Erfassen einer Distanz eines Intensitätsextremums zu der jeweiligen Sektor-Spitze jedes Sektors wenigstens einer Gruppe der Sektoren, um einen Distanzvektor zu erhalten, der die Distanzen aus allen Sektoren wenigstens der Gruppe der Sektoren enthält;

eine erste Fourier-Transformationseinheit zum Durchführen einer Fourier-Transformation des Distanzvektors, um so einen ersten Fourier-Vektor V=(v0,v1,...,vn-1) zu erhalten; und

eine Zentrumserfassungseinheit zum Ermitteln eines Zentrums der ringartigen Struktur unter Verwendung der Komponente v1 des durch die Fourier-Transformation erhaltenen ersten Fourier-Vektors V.

Die Vorrichtung zur Bildbearbeitung umfasst weiter eine oder beide der Einheiten, um die Formabweichung und/oder den Radius der ringartigen Struktur zu erhalten:

- eine Radiuserfassungseinheit zum Ermitteln eines Radius der ringartigen Struktur aus dem durch die Fourier-Transformation erhaltenen ersten Fourier-Vektor und/oder

- einer Formabweichungserfassungseinheit zum Erfassen einer Abweichung der ringartigen Struktur von einer Kreisform aus dem durch die Fourier-Transformation erhaltenen ersten Fourier-Vektor.

Die Sektorbildungseinheit umfasst bevorzugt wenigstens eine der folgenden Einheiten:

- eine Aufteilungseinheit zum Aufteilen eines gegebenen Intensitätsbildes, insbesondere Interferogramm-Bildes, in N radiale Bildsektoren und/oder
- eine Zuweisungseinheit zum fortlaufenden Zuweisen einer fortlaufenden Sektornummer n mit n = 0... N-1 zu benachbarten Sektoren

und/oder

- eine Ringzentrumsauswähleinheit zum Festlegen eines näherungsweisen Ringzentrums als gemeinsamen Sektorursprung $(cx_0, cy_0)$ der radialen Sektoren, der die jeweiligen Sektor-Spitzen bildet, wenn das Zentrum der Ringstruktur nicht genau bekannt ist.

Die Distanzerfassungseinheit weist bevorzugt die folgenden Einheiten auf:

eine Intensitätsvektorerzeugungseinheit zur Erzeugung eines 1-dimensionalen Intensitätsvektors aus dem 2-dimensionalen Interferogramm des jeweiligen Sektors durch 2D-1 D-Transformation, die derart gewählt ist, dass in dem 2-dimensionalen Interferogramm vorhandene Intensitätsextrema äquidistant in dem 1-dimensionalen Intensitätsvektor erscheinen;

eine zweite Fourier-Transformationseinheit zum Durchführen einer Fourier-Transformation an dem 1-dimensionalen Intensitätsvektor, um so einen zweiten Fourier-Vektor zu erzeugen;

eine Frequenz- und/oder Phasenlageermittlungseinheit zum Ermitteln von Frequenz- und/oder Phasenlage der dominanten Frequenz aus dem durch die Fourier-Transformation des 1-dimensionalen Intensitätsvektors erhaltenen zweiten Fourier-Vektor sowie

eine Distanzermittlungseinheit zum Ermitteln der Distanz des jeweiligen Intensitätsextremums von der Sektor-Spitze in dem Sektor durch Rückrechnung der Frequenz und der Phasenlage der dominanten Frequenz von dem Frequenzraum in dem Ortsraum.

Die erste Fourier-Transformationseinheit ist bevorzugt zum Überführen des Distanzvektors $D = (d_0, d_1, ..., d_{N-1})$ durch diskrete Fourier-Transformation in einen complexzahligen Fourier-Vektor $V = (v_0, v_1, ..., v_{N-1})$ ausgebildet, wobei sich die Werte des Fourier-Vektors aus den Werten des Distanzvektors durch die Definition der diskreten Fourier-Transformation ergeben als:

$$v_k = \frac{1}{N} \sum_{n=0}^{N-1} d_n \, e^{-i 2\pi k \frac{n}{N}} \qquad \text{mit } k = 0...N-1,$$

wobei N die Anzahl der Sektoren darstellt.

Die Zentrumserfassungseinheit ist bevorzugt zum Ermitteln der Lage des Ringzentrums aus der Komponente $v_1$ des ersten Fourier-Vektors ausgebildet.

Die Zentrumserfassungseinheit ist bevorzugt zum Bestimmen der Koordinaten cx, cy des Ringzentrums durch:

$$cx = cx_0 + 2\,\mathrm{Re}(v_1)$$

und

$$cy = cy_0 + 2\,\mathrm{Im}(v_1)$$

ausgebidet, wobei

$cx_0$, $cy_0$     Koordinaten des gemeinsamen Sektorursprungs,
$\mathrm{Re}(v_1)$     der Realanteil der komplexen Zahl $v_1$ und
$\mathrm{Im}(v_1)$     der Imaginäranteil der komplexen Zahl $v_1$

darstellen.

Die Radiuserfassungseinheit ist bevorzugt zum Ermitteln eines Ringradius der ringartigen Struktur aus der Fourier-Vektorkompenente $v_0$ oder aus der Fourier-Vektorkompenente $v_0$ und wenigstens einer der Fourier-Vektorkomponenenten $v_1$ und $v_2$ ausgebildet.

Die Radiuserfassungseinheit ist bevorzugt zum Bestimmen eines mittleren Radius durch den Betrag $|v_0|$ der Fourier-Vektorkompenente $v_0$ und zum Ermitteln des Radius durch Korrektur des mittleren Radius durch wenigstens eine der weiteren Fourier-Vektorkomponente ausgebildet.

Die Radiuserfassungseinheit ist bevorzugt ausgebildet zum Berechnen des Radius der ringartigen Struktur aus den Fourier-Vektor-Komponenten $v_0$, $v_1$ und $v_2$ durch:

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

Die Formabweichungserfassungseinheit ist bevorzugt zum Ermitteln einer Ellipsität der ringartigen Struktur aus wenigstens einer Komponente des ersten Fourier-Vektors ausgebildet.

Die Formabweichungserfassungseinheit ist bevorzugt zum Errechnen der Ellipsität aus der Fourier-Vektorkomponente $v_2$ ausgebildet und insbesondere zum Errechnen einer numerischen Ellipsität $\varepsilon$ durch

$$\varepsilon = 2\sqrt{2\frac{|v_2|}{|v_0|}}$$

ausgebildet.

Die Vorrichtung ist bevorzugt zur Berechnung von Ringradien, Ringzentren und/oder Ringellipsitäten in Fabry-Perot-Interferonmetern ausgebildet.

Die Vorrichtung ist bevorzugt zum ein- oder mehrmaligen Wiederholen einer Bestimmung eines Ringzentrums der ringartigen Struktur ausgebildet, wobei die Sektorbildungseinheit zum Definieren der Sektoren derart ausgebildet ist, dass ein jeweils in dem zuvorigen Durchlauf ermitteltes Ringzentrum in dem nächsten Durchlauf als gemeinsamer Sektorursprung für die Sektoren herangezogen wird.

Die Sektorbildungseinheit kann zum Definieren sich überlappender Sektoren ausgebildet sein.

Mehrere Distanzerfassungseinheiten können vorgesehen ein, um die Distanz eines Intensitätsextremums von der jeweiligen Sektorspitze in mehreren Sektoren gleichzeitig zu erfassen. Dadurch lässt sich Schritt b) und damit das Verfahren insgesamt schneller durchführen.

Die Distanzerfassungseinheit kann eine Mittelwertbildungseinheit aufweisen, die entlang einer bestimmten Kreiskontur mit vorgegebenem Radius $R_L$ oder bestimmten Ellipsenkontur mit vorgegebener Ellipsenhalbachsenlängen erfasste Intensitätswerte mittelt.

Die Vorrichtung kann zum ein- oder mehrmaligen Wiederholen einer Bestimmung eines Ringzentrums der ringartigen Struktur sowie einer Abweichung der ringartigen Struktur von einer Kreisform, insbesondere zur Bestimmung einer Ellipsität der ringartigen Struktur ausgebildet sein, wobei die Mittelwertbildungseinheit derart ausgebildet sein kann, dass eine in einem zuvor durchgeführten Durchlauf der Schritte a) bis d) erfasste Lage und Form, insbesondere Ellipsität, der ringartigen Struktur als Ausgangspunkt zur Mittelung entlang der korrekten Kreis- oder Ellipsenkontur in einem darauffolgenden Durchlauf verwendet wird.

Es kann eine Kalibriereinheit zur Kalibrierung der Vorrichtung aufgrund von Ausgangswerten der Zentrumerfassungseinheit, der Radiuserfassungseinheit und/oder der Formabweichungserfassungseinheit vorgesehen sein.

Die Vorrichtung kann zur Verwendung

- zur Erfassung von Längen- oder Wellenlängenänderung,
- an Bord eines Luftfahrzeuges zur Erfassung von Böen oder
- zur Bestimmung der Lageänderung von Objekten, die mit einem Ringmuster versehen sind, wobei das Ringmuster als Bild aufgenommen wird und einer entsprechenden Bildbearbeitung unterzogen wird, um die Lage des Ringmusters und damit die Lage des Objekts zu erfassen,

ausgebildet sein.

Die Vorrichtung ist vorzugsweise insbesondere zur Verwendung in Verfahren und Vorrichtungen, wie sie in WO2004/092767 A1 beschrieben sind, ausgebildet. Es wird für weitere Einzelheiten ausdrücklich auf diese Druckschrift verwiesen.

Ausführungsbeispiele der Erfindung werden nachfolgend anhand der beigefügten Zeichnung näher erläutert. Darin zeigt:

Fig. 1 ein Fabry-Perot-Interferogramm mit eingezeichneten N=8 radialen Bildsegmenten - insbesondere Bildsektoren - ausgehend von einem näherungsweise festgelegtem Ringzentrum ($cx_0$, $cy_0$) als Segment- oder Sektorursprung;

Fig. 2 einen Graph, der die Distanz vom Segment- oder Sektorursprung zum ersten Intensitätsmaximum für jedes der Bildsegmente - Bildsektoren - illustriert;

Fig. 3 eine symbolische Darstellung einer Maximaldistanz $d_{max}$ und Minimaldistanz $d_{min}$ bei vorhandenem Mittelpunktsversatz; die Distanz besitzt daher als Funktion des Segment- oder Sektorwinkels die Periode $2\pi$;

Fig. 4 eine symbolische Darstellung der zwei Maximaldistanzen $d_{max1}$, $d_{max2}$ und der zwei Minimaldistanzen $d_{min1}$, $d_{min2}$ bei vorhandener Ellipsität und verschwindendem Mittelpunktsversatz; die Distanz besitzt daher als Funktion des Segment- oder Sektorwinkels die Periode $\pi$;

Fig. 5 ein Beispiel für ein Fabry-Perot-Interferogramm mit durch das hier beschriebene Verfahren bestimmten Größen Ringzentrum, Ringradius und Ringellipsität; und

Fig. 6 ein Blockschaltbild einer beispielhaften Ausführungsform einer Vorrichtung zur Bildverarbeitung für in Fig. 1 beispielhaft dargestellte Interferogramme.

In der WO2004/092767 A1, auf die für weitere Einzelheiten verwiesen wird, sind eine Vorrichtung und ein Verfahren beschrieben und gezeigt, mittels denen von einem Luftfahrzeug aus Böen, die auf das Luftfahrzeug einwirken, erfassbar sind. Ein Ziel ist es, ein System zu schaffen, mit dem solchen Böen automatisch gegengesteuert werden kann. Hierzu ist eine schnelle Erfassung der Böen nötig. Gemäß der WO2004/092767 A1 werden hierzu mittels eines Laser-Doppler-System Interferogramme, insbesondere Fabry-Perot-Interferogramme erzeugt und diese Interferogramme mittels Photodetektoren aufgenommen und die Intensitätsbildaufnahmen einer Bildverarbeitung unterzogen, um insbesondere die Radien von ringartigen Strukturen in den Interferogrammen zu vermessen. Durch Vermessung von Änderungen können hierzu Rückschlüsse auf Geschwindigkeitsänderungen des beobachteten Mediums gezogen werden. Insbesondere können hierbei Böen detektiert werden.

Hierzu ist eine schnelle Vermessung der Ringradien bei der Bildbearbeitung wünschenswert. Ein Verfahren und eine Vorrichtung zur schnellen Vermessung von Ringradien entsprechender Interferogramme ist in der DE 10 2006 030 399 B3 beschrieben, auf die für weitere Einzelheiten ausdrücklich verwiesen wird. Für eine genaue Erfassung der Ringradien sollte man hierbei aber möglichst genau vom Ringzentrum der ringartigen Struktur ausgehen. Oft ist aber die genaue Lage der Ringradien unbekannt. Auch können die ringartigen Strukturen Abweichungen von der idealen Kreisform aufweisen, die ebenfalls zu Ungenauigkeiten der Vermessung führen können.

Im folgenden werden Ausführungsbeispiele für ein Verfahren und eine Vorrichtung beschrieben, mit denen man die genaue Lage des Ringzentrums der ringartigen Struktur sowie Formabweichungen und einen genauen Ringradius der ringartigen Struktur erfassen kann.

Das Verfahren kann in fünf Verfahrensschritte aufgeteilt werden. Am Ende dieser Verfahrensschritte sind Ringradius, Ringzentrum und Ringellipsität zu einem gegebenem Interferogramm-Bild bestimmt.

Erster Schritt a): Aufteilung des Bildes in radiale Bildsektoren:

Im ersten Schritt - Schritt a) - wird ein gegebenes Interferogramm-Bild in N radiale Bildsegmente - hier: radiale Bildsektoren - aufgeteilt. Den Sektoren wird eine fortlaufende Sektornummer n mit n = 0...N-1 zugewiesen. Bei unbekanntem Ringzentrum wird ein näherungsweises Ringzentrum als Sektorursprung $(cx_0, cy_0)$ der radialen Sektoren festgelegt.

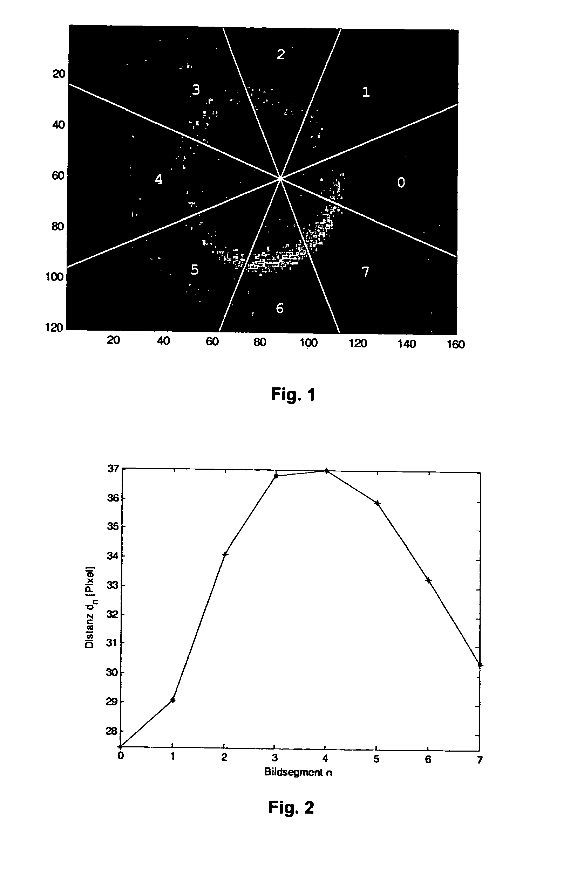

Ein Ausführungsbeispiel des ersten Schritts a) ist in Fig. 1 gezeigt. Fig. 1 zeigt als Beispiel für ein zu verarbeitendes Intensitätsbild ein Fabry-Perot-Interferogramm mit eingezeichneten N=8 radialen Bildsektoren ausgehend von einem näherungsweise festgelegtem Ringzentrum $(cx_0, cy_0)$ als Sektorursprung. Alle acht Sektoren gehen gemeinsam von dem gleichen Sektorursprungspunkt $cx_0$, $cy_0$ aus.

Der Sektorursprung liegt innerhalb der durch das erste Intensitätsmaxima gebildeten ringartigen Struktur. Jedoch fällt in dem in Fig. 1 gezeigten Beispiel der Sektorursprung nicht mit dem Ringzentrum der ringartigen Struktur zusammen.

Den acht Sektoren sind die jeweiligen Sektornummem n = 0 bis n = 7 zugewiesen.

Zweiter Schritt b): Bestimmung der radialen Distanzen

In einem zweiten Schritt b) wird das in der DE 2006 030 399 B3 zur Bestimmung der Lage eines Intensitätsextremums beschriebene Verfahren auf jeden einzelnen der N Bildsektoren angewendet, wodurch eine radiale Distanz $d_n$ vom Sektorursprung zu dem ersten Intensitätsmaximum im Segment n erhalten wird. Dies definiert den Distanzvektor $D = (d_0, d_1, ..., d_{N-1})$.

Es wird für weitere Einzelheiten des Verfahrens zur Distanzbestimmung in vollem Umfang auf die DE 2006 030 399 B3 verwiesen. Kurz zusammengefasst wird gemäß dem in der DE 2006 030 399 B3 beschriebenen Verfahren aus einem 2D-Bild ein 1 D-Intensitätsvektor erzeugt, beispielsweise durch Mittelung der Intensität entlang einer Kreiskontur zu einem jeweils gegebenen Radius, wobei der 1D-Intensitätsvektor die gemittelten Werte für verschiedene Radien enthält. Anschließend wird eine Fourier-Transformation durchgeführt und so der 1 D-Intensitätsvektor in einen zweiten Fourier-Vektor überführt. Aus diesem zweiten Fourier-Vektor wird die Frequenz und Phasenlage der dominanten Frequenz ermittelt, die der Lage der äquidistanten Intensitätsextrema entspricht.

Eine beispielhafte Darstellung von dem aus dem Intensitätsbild von Fig. 1 erzeugten Distanzvektor D ist in Fig. 2 gezeigt. Fig. 2 zeigt eine graphische Darstellung der Distanz vom Segmentursprung zum ersten Intensitätsmaximum für jeden der acht Bildsektoren mit n=0 bis n=7.

Dritter Schritt c): Fourier-Transformation der radialen Distanzen

In einem dritten Schritt c) wird der Distanzvektors $D = (d_0, d_1, ..., d_{N-1})$ durch diskrete Fourier-Transformation in einen komplexzahligen ersten Fourier-Vektor $V = (v_0, v_1, ..., v_{N-1})$ überführt. Die Werte des ersten Fourier-Vektors ergeben sich aus den Werten des Distanzvektors durch die Definition der diskrete Fourier-Transformation als:

$$v_k = \frac{1}{N} \sum_{n=0}^{N-1} d_n \, e^{-i 2\pi k \frac{n}{N}} \qquad (k = 0 \ldots N\text{-}1). \qquad (1)$$

Vierter Schritt d1): Bestimmung des Ringzentrums aus dem Fourier-Vektor

In einem vierten Schritt d1) wird die in dem dritten Schritt c) erhaltene Fourier-Vektor Komponente $v_1$ verwendet um das gesuchte Ringzentrum zu bestimmen.

Ein Ausführungsbeispiel des vierten Schritts d1) zur Berechnung des gesuchten Ringzentrums (cx,cy) ist gegeben durch:

$$cx = cx_0 + 2\,Re(v_1)$$

$$cy = cy_0 + 2\,Im(v_1)$$

Hierin ist $(cx_0, cy_0)$ der in dem ersten Schritt a) festgelegte Sektorursprung. $Re(v_1)$ ist der Realanteil und $Im(v_1)$ ist der Imaginäranteil der komplexen Zahl $v_1$.

Erläuterung: Liegt der Sektorursprung nicht exakt im Ringzentrum des Interferogramms, so weist die Distanz $d_n$ als Funktion von n das Verhalten einer harmonischen Schwingung auf, siehe Fig. 2. Im Bezug auf die Winkelausrichtung der Bildsektoren besitzt die harmonische Schwingung eine Periode von 2n. Diese Periode entspricht dem Element $v_1$ des ersten Fourier-Vektors. Trägt man $v_1$ als Vektor in der complexen Zahlenebene (Gaußsche Ebene auf), so zeigt $v_1$ in Richtung des Ringzentrums. Der doppelte Betrag $|v_1|$ des Vektors $v_1$ entspricht dem Abstand zwischen Sektorursprung und Ringzentrum. Daher kann der Sektorursprung direkt mit den Real- und Imaginäranteilen von $v_1$ korrigiert werden.

<u>Fünfter Schritt: Bestimmung von Ringradius und Ringellipsität aus dem Fourier-Vektor</u>

In einem fünften Schritt werden - zum Beispiel in zwei Teilschritten d2) und d3) - die Komponenten des ersten Fourier-Vektors zur Bestimmung des Ringradius - Radius des innersten Rings, Schritt d2) - und der Ringellipsität - Formabweichung von der idealen Kreisform, Schritt d2) - genutzt. Dabei werden die Fourier-Vektor Komponenten $v_0$, $v_1$ und $v_2$ des ersten Fourier-Vektors verwendet. Der gesuchte Ringradius R ist dann als Funktion $R = R(v_0, v_1, v_2)$ darstellbar (s. Ausführungsbeispiel). Die Abhängigkeiten des gesuchte Ringradius R von $v_0$, $v_1$ und $v_2$ ergeben sich wie folgt.

Der mittlere Radius $v_0$:

Die Fourier-Vektor Komponente $v_0$ nähert den gesuchten Ringradius als mittleren Ringradius durch Mittelung der radialen Distanzen an. Wie man aus Gleichung (1) durch Einsetzen von k = 0 sieht, ist dieser gegeben durch $v_0$:

$$|v_0| = \frac{1}{N}\sum_{n=0}^{N-1} d_n \qquad \text{(mittlerer Ringradius)}$$

Der mittlerer Ringradius $|v_0|$ entspricht dem gesuchten Ringradius nur unter der Bedingung, dass der Sektorsprung im korrekten Ringzentrum liegt (kein Mittelpunktversatz) und keine Ringellipsitäten vorliegen. Im Allgemeinen sollte daher der mittlere Radius $|v_0|$ korrigiert werden. Dies geschieht durch die Fourier-Vektor Komponenten $v_1$ und $v_2$.

Radiuskorrektur durch $v_1$:

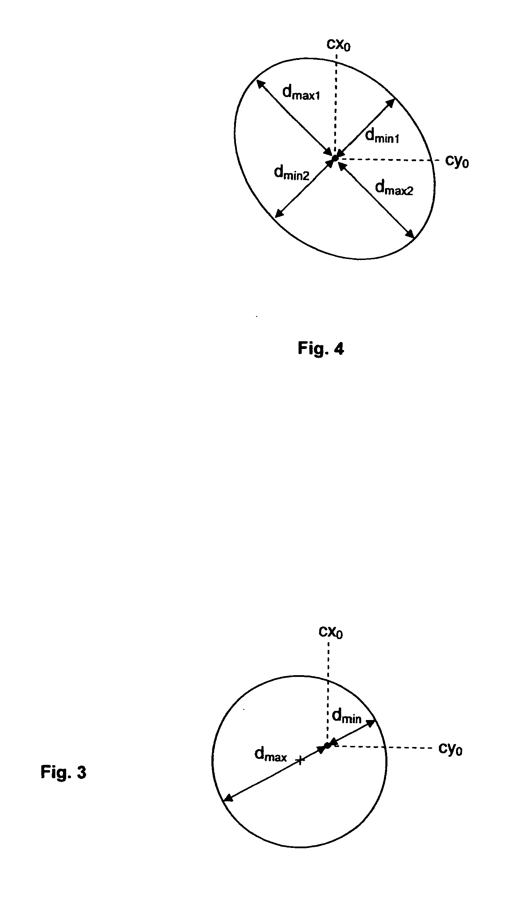

Umso größer der Abstand des gewählten Sektorursprungs zum wahren Ringzentrum ist, umso stärker ist die spektrale Komponente mit der Periode $2\pi$ im Distanzvektor D. Dies liegt daran, dass die Distanz als Funktion des Sektorwinkels genau ein Maximum und ein Minimum besitzt (siehe Fig. 3). Die der Periode von $2\pi$ entsprechende Fourier-Vektor Komponente ist $v_1$. Daher ist $|v_1|$ ein Maß für den Mittelpunktsversatz und kann zur Korrektur des mittleren Radius herangezogen werden.

Fig. 3 zeigt eine symbolische Darstellung der Maximaldistanz $d_{max}$ und Minimaldistanz $d_{min}$ bei vorhandenem Mittelpunktsversatz. Die Distanz besitzt daher als Funktion des Sektorwinkels die Periode $2\pi$.

Radiuskorrektur duch $v_2$:

Umso stärker die Ellipsität der Interferenzringe ist, umso stärker ist die spektrale Komponente mit der Periode $\pi$ im Distanzvektor D. Dies liegt daran, dass die Distanz zu einer Ellipsenkontur genau zwei Maxima (entsprechend der großen Halbachsen) und zwei Minima (entsprechend der kleinen Halbachsen) besitzen - d.h. zwei Schwingungszyklen pro Sektorumlauf. Die dieser Periode entsprechende Fourier-Vektor Komponente ist $v_2$. Daher ist der Betrag $|v_2|$ dieser Komponente ein Maß für die Ellipsität der Interferenzringe und kann zur Korrektur des mittleren Radius herangezogen werden.

Fig. 4 zeigt eine symbolische Darstellung der zwei Maximaldistanzen $d_{max1}$, $d_{max2}$ und der zwei Minimaldistanzen $d_{min1}$, $d_{min2}$ bei vorhandener Ellipsität und verschwindendem Mittelpunktsversatz. Die Distanz besitzt daher als Funktion des Sektorwinkels die Periode $\pi$.

Ausführungsbeispiele:

Ein Ausführungsbeispiel zur Berechnung des Radius R ist gegeben durch:

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

Im Grenzwert eines verschwindenden Mittelpunktversatzes ($|v_1|$) = 0) und einer verschwindenden Ellipsität ($|v_2|$ = 0) ergibt sich wiederum der mittlere Radius $|v_0|$ als gesuchter Radius.

Ein Ausführungsbeispiel zur Berechnung der Ringellipsität (in der Form der sog. numerischen Exzentrizität $\varepsilon$ der Ellipse) ist gegeben durch:

$$\varepsilon = 2 \sqrt{2 \frac{|v_2|}{|v_0|}}.$$

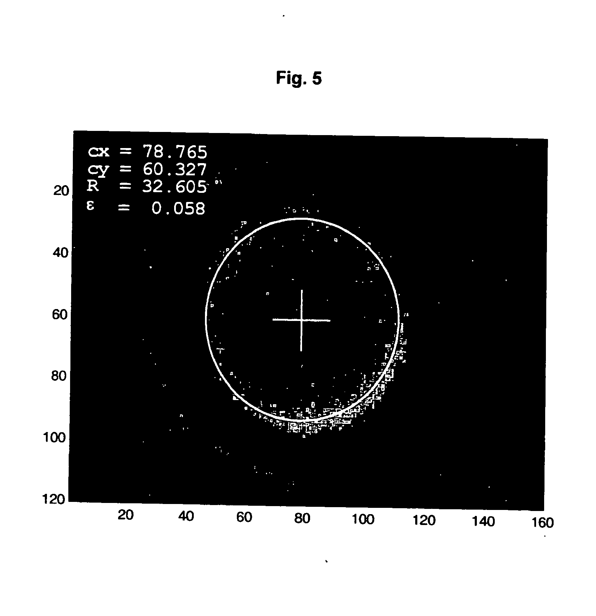

Ein Ergebnis der Anwendung der Methodik auf das Interferogramm aus Fig. 1 ist in Fig. 5 gezeigt. Fig. 5 zeigt das Fabry-Perot-Interferogramm mit durch das Verfahren bestimmten Größen Ringzentrum, Ringradius und Ringellipsität.

Das hier beschriebene Verfahren weist insbesondere die folgenden Vorteile auf. Ein wesentlicher Vorteil des Verfahrens besteht darin, dass Ringradien in Fabry-Perot-Interferogrammen selbst bei nur ungenau bekanntem Ringzentrum und eventuell vorhandener Ringellipsität algorithmisch sehr effizient und genau bestimmt werden können.

Das Verfahren benutzt zudem eine einheitliche Methodik (Messvorschrift) zur Bestimmung von Ringradius, Ringzentrum und Ringellipsität. Dies verhindert störende systematische Effekte, welche bei Verwendung unterschiedlicher Messvorschriften zur Bestimmung dieser Größen entstehen können.

Das Verfahren verwendet ausschließlich algorithmische Komponenten die in der Hardwareimplementierungen sehr schnell (in Echtzeit) ausgeführt werden können.

Vorrichtung zur Durchführung des Verfahrens:

Eine Vorrichtung zur Durchführung des Verfahrens weist entsprechend zum Durchführen der einzelnen Schritte und Teilschritte ausgebildete Einheiten auf. Diese Einheiten können in Software oder in Hardware implementiert sein.

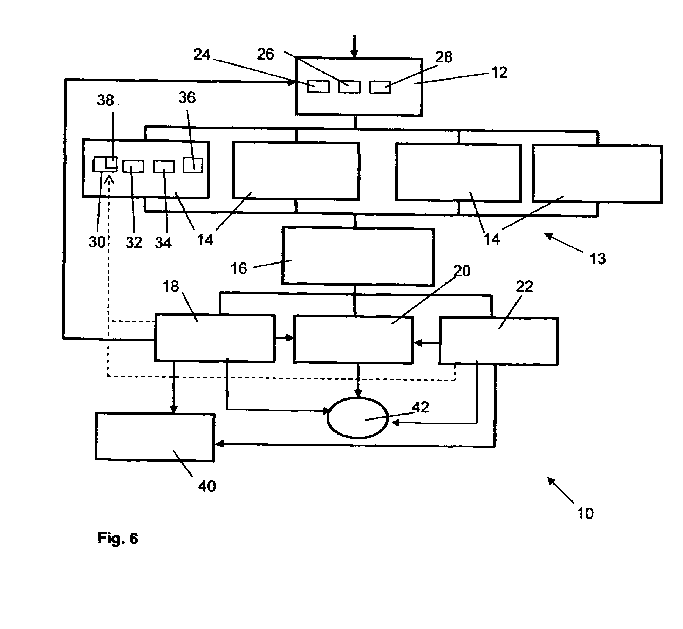

Ein Ausführungsbeispiel für eine solche Vorrichtung ist schematisch in Fig. 6 dargestellt. Fig. 6 zeigt ein Blockschaltbild für eine Vorrichtung 10 zur Bildverarbeitung von eine ringartige Struktur aufweisenden Intensitätsbildern. Die Vorrichtung 10 ist zur derartigen Bildverarbeitung ausgebildet, dass Lage, Formabweichung und/oder Radius der ringartigen Struktur vermessbar sind. Insbesondere ist die Vorrichtung 10 zur Auswertung von Interferogrammen und/oder zur genauen Ortsbestimmung von Objekten ausgebildet. Eingegeben wird hierzu beispielsweise ein digitalisiertes Intensitätsbild eines mittels eines Photodetektor oder einer Kamera aufgezeichneten Interferogramms, wie beispielsweise in Fig. 1 dargestellt.

Die Vorrichtung 10 weist eine Sektorbildungseinheit 12, eine Distanzvektorbildungseinheit 13 mit mehrere Distanzerfassungseinheiten 14, eine erste Fourier-Transformationseinheit 16, eine Zentrumserfassungseinheit 18, eine Radiuserfassungseinheit 20 und eine Formabweichungserfassungseinheit 22 auf.

Die Sektorbildungseinheit 12 definiert die N Sektoren des Intensitätsbildes mit jeweils an dem gemeinsamen Sektorursprung, vorzugsweise innerhalb der ringartigen Struktur liegenden, Sektor-Spitzen. Die Sektorbildungseinheit 12 weist hierzu eine Ringzentrumsauswähleinheit 24, eine Aufteilungseinheit 26 und eine Zuweisungseinheit 28 auf.

Die Ringzentrumsauswähleinheit legt ein Ringzentrum als gemeinsamen Sektorursprung ($cx_0$, $cy_0$) der radialen Sektoren, der die jeweiligen Sektor-Spitzen bildet fest. Hierzu wird, wenn das Zentrum der Ringstruktur nicht genau bekannt ist, ein näherungsweises Ringzentrum festgelegt. Geeignet sind hierfür insbesondere Punkte, die mit hoher Wahrscheinlichkeit innerhalb der ringartigen Struktur liegen. Zum Beispiel startet man am Anfang mit einem in der Bildmitte liegenden Pixel. Andererseits wird, wenn das Verfahren mittels der Vorrichtung bereits vorher durchgeführt worden ist, ein in einem vorherigen Durchlauf mittels der Zentrumserfassungseinheit 18 erfasstes Ringzentrum als näherungsweises Ringzentrum $cx_0$, $cy_0$ festgelegt. Dies ist in Fig. 6 durch einen Verbindungspfeil zwischen der Zentrumserfassungseinheit 18 und der Ringzentrumsauswähleinheit 24 angedeutet.

Ausgehend von dem durch die Ringzentrumsauswähleinheit 24 festgelegten näherungsweisen Ringzentrum teilt die Aufteilungseinheit das eingegebene Intensitätbild wie in Fig. 1 dargestellt in die N radiale Bildsektoren auf. Die Zuweisungseinheit 28 dient zum fortlaufenden Zuweisen der fortlaufenden Sektornummer n mit n = 0...N-1 zu den jeweils benachbarten Sektoren, wie dies ebenfalls aus Fig. 1 ersichtlich ist.

Jede Distanzerfassungseinheit 14 dient zum Erfassen der Distanz eines Intensitätsextremums zu der jeweiligen Sektor-Spitze eines Sektors. Die mehreren Distanzerfassungseinheiten erfassen dabei eine solche Distanz gleichzeitig in mehreren der Sektoren. Die Distanzvektorbildungseinheit 13 bildet dann aus dem Ergebnis der Distanzerfassung für jeden der Sektoren n=0 bis n=N-1 den Distanzvektor.

Die erste Fourier-Transformationseinheit 16 dient zum Durchführen einer Fourier-Transformation des Distanzvektors, um so den ersten Fourier-Vektor zu erhalten.

Die Zentrumserfassungseinheit 18 dient zum Ermitteln des Ringzentrums der ringartigen Struktur aus dem durch die Fourier-Transformation erhaltenen ersten Fourier-Vektor. Die Radiuserfassungseinheit 20 ermittelt den Radius der ringartigen Struktur aus dem durch die Fourier-Transformation erhaltenen ersten Fourier-Vektor. Die Formabweichungserfassungseinheit erfasst eine Abweichung der ringartigen Struktur von einer Kreisform durch Erfassen einer Ellipsität der ringartigen Struktur aus dem durch die Fourier-Transformation erhaltenen ersten Fourier-Vektor.

Jede Distanzerfassungseinheit 14 weist, wie dies in Fig. 6 nur bei einer der Distanzerfassungseinheiten angedeutet ist, eine Intensitätsvektorerzeugungseinheit 30, eine zweite Fourier-Transformationseinheit 32, eine Frequenz- und/oder Phasenlageermittlungseinheit 34 und eine Distanzermittlungseinheit 36 auf. Für nähere Einzelheiten zu der Distanzerfassungseinheit 14 und deren Einheiten 30, 32, 34 und 36 wird auf die DE 10 2006 030 399 B3 verwiesen. Wie aus dieser Druckschrift ersichtlich, dient die Identitätsvektorerzeugungseinheit 30 zur Erzeugung des 1-dimensionalen Intensitätsvektors aus dem 2-dimensionalen Interferogramm des jeweiligen Sektors durch 2D-1 D-Transformation, die derart gewählt ist, dass in dem 2-dimensionalen Interferogramm vorhandene Intensitätsextrema äquidistant in dem 1-dimensionalen Intensitätsvektor erscheinen. Die zweite Fourier-Transformationseinheit 32 dient zum Durchführen der Fourier-Transformation an dem 1-dimensionalen Intensitätsvektor, um so den zweiten Fourier-Vektor zu erzeugen. Die Frequenz- und/oder Phasenlageermittlungseinheit 34 dient zum Ermitteln von Frequenz- und/oder Phasenlage der dominanten Frequenz aus dem durch die Fourier-Transformation des 1-dimensionalen Intensitätsvektors erhaltenen zweiten Fourier-Vektor. Und die Distanzermittlungseinheit 36 dient zum Ermitteln der Distanz des jeweiligen Intensitätsextremums von der Sektor-Spitze in dem Sektor durch Rückrechnung der Frequenz und der Phasenlage der dominanten Frequenz von dem Frequenzraum in dem Ortsraum.

Die Intensitätsvektorerzeugungseinheit 30 weist eine Mittelwertbildungseinheit 38 auf, die zum Durchführen der 2D-1 D-Transformation entlang einer bestimmten Kreiskontur mit vorgegebenem Radius $R_L$ erfasste Intensitätswerte mittelt, wie dies genauer in der DE 10 2006 030 399 B3 beschrieben ist. Die Vorrichtung 10 ist zum ein- oder mehrmaligen Wiederholen einer Bestimmung des Ringzentrums der ringartigen Struktur sowie der Abweichung der ringartigen Struktur von einer Kreisform durch Bestimmung einer Ellipsität der ringartigen Struktur ausgebildet. Die Mittelwertbildungseinheit 38 ist dabei derart ausgebildet, dass eine in einem zuvor durchgeführten Durchlauf des Verfahrens erfasste Lage und Form, insbesondere Ellipsität, der ringartigen Struktur als Ausgangspunkt zur Mittelung entlang der korrekten Kreis- oder Ellipsenkontur in einem darauffolgenden Durchlauf verwendet wird. Dies ist in Fig. 6 durch einen Verbindungspfeil zwischen der Zentrumserfassungseinheit 18 und der Formabweichungserfassungseinheit 22 einerseits und der Mittelwertbildungseinheit 38 andererseits dargestellt.

Die Vorrichtung 10 weist weiter eine Kalibriereinheit 40 auf, mittels der die Vorrichtung 10 aufgrund von Ausgangswerten der Zentrumerfassungseinheit 18, der Radiuserfassungseinheit 20 und/oder der Formabweichungserfassungseinheit 22 für zukünftige Messungen kalibrierbar ist.

Einzelheiten zur Funktion und Ausbildung der einzelnen Einheiten der Vorrichtung 10 ergeben sich aus den obigen Erläuterungen zu den einzelnen Verfahrensschritten des Verfahrens, das mittels der Vorrichtung 10 durchführbar ist.

Am Ausgang 42 der Vorrichtung 10 lassen sich dann der durch die Radiuserfassungseinheit ermittelte Ringradius, das durch die Zentrumserfassungseinheit ermittelte Ringzentrum und die durch die Formabweichungserfassungseinheit ermittelte Ringellipsität abfragen.

Weitere mögliche Ausführungsformen der Verfahrens und/oder der Vorrichtung:

Durchläufe des ersten Schritts a) bis vierten Schritts d1) können alternativ auf einem Interferenzbild mehrfach (iterativ) wiederholt werden. Dabei wird in einer weiteren Iteration als Sektorursprung jeweils die vorausgegangene Schätzung des Ringzentrums verwendet. Dies erhöht die Genauigkeit der Mittelpunktsbestimmung.

Der erste Schritt a) kann alternativ mit sich überlappenden Bildsegmenten oder sich überlappenden Bildsektoren ausgeführt werden.

Der zweite Schritt b) kann zum Beispiel bei Verwendung entsprechender Parallelhardware auf mehreren Sektoren gleichzeitig (parallel) ausgeführt werden.

Der zweite Schritt b) kann alternativ mit anderen (d.h. mit sich von dem in der DE 10 2006 030 399 B3 beschriebenen Verfahren unterscheidenden) Verfahren zur Distanzbestimmung ausgeführt werden.

Der zweite Schritt b) kann zusätzlich die aus einer früheren Berechnung in dem fünften Schritt erhaltenen Informationen zur Ringellipsität $\varepsilon$ nutzen um die in der DE 10 2006 030 399 B3 beschriebene radiale Mittelung entlang einer Kreiskontur durch die Mittelung entlang der korrekten Ellipsenkontur zu ersetzen. Dazu liefert die Phase $arg(v_2)$ von $v_2$ ein Maß für die Lage der Ellipsenhauptachse.

In dem vierten Schritt und dem fünften Schritt können alternativ weitere Fourier-Vektor-Komponenten des ersten Fourier-Vektors zur Berechnung verwendet werden.

Die in dem fünften Schritt erhaltenen Informationen zum Ringzentrum können zur Kalibration des Systems (z.B. Ausrichtung auf Bildmitte) genutzt werden.

Die in dem fünften Schritt erhaltene Information zur Ringellipsität $\varepsilon$ können zur Kalibration des Systems (Minimierung von $\varepsilon$) genutzt werden.

Das Verfahren lässt sich vorteilhaft auf kostengünstigen GPUs (Graphics Processing Units) hardwaretechnisch umsetzen.

Das Verfahren lässt sich neben der Anwendung auf Interferogramme auf die allgemeine genaue Bestimmung von Lageänderungen von Objekten anwenden. Dazu werden Objekte, deren Lage bestimmt werden soll, mit einem im Sinne dieser Erfindung auswertbarem Ringmuster (z.B. Interferogramm-Aufdruck) versehen, durch eine Kamera beobachtet und die Kamerabilder dem Verfahren zur Auswertung zugänglich gemacht.

**Bezugszeichenliste:**

| | |
|---|---|
| 10 | Vorrichtung zur Bildbearbeitung |
| 12 | Sektorbildungseinheit |
| 13 | Distanzvektorbildungseinheit |
| 14 | Distanzerfassungseinheit |
| 16 | erste Fourier-Transformationseinheit |
| 18 | Zentrumserfassungseinheit |
| 20 | Radiuserfassungseinheit |
| 22 | Formabweichungserfassungseinheit |
| 24 | Ringzentrumsauswähleinheit |
| 26 | Aufteilungseinheit |
| 28 | Zuweisungseinheit |
| 30 | Intensitätsvektorerzeugungseinheit |
| 32 | zweite Fourier-Transformationseinheit |
| 34 | Frequenz- und/oder Phasenlageermittlungseinheit |
| 36 | Distanzermittlungseinheit |
| 38 | Mittelwertsbildungseinheit |
| 40 | Kalibriereinheit |
| 42 | Ausgang |

**Patentansprüche**

**1.** Verfahren zur Bildverarbeitung von eine ringartige Struktur aufweisenden Intensitätsbildern zwecks Vermessung von Lage, Formabweichung und/oder Radius der ringartigen Struktur, insbesondere zur Auswertung von Interferogrammen und/oder zur genauen Ortsbestimmung von Objekten, mit den Schritten:

a) Definieren von N Sektoren des Intensitätsbildes mit jeweils an einem gemeinsamen, näherungsweise festgelegten Sektorursprungspunkt innerhalb der ringartigen Struktur liegenden Sektor-Spitzen, wobei N eine natürliche Zahl mit N>1 ist;

b) Erfassen einer Distanz eines Intensitätsextremums zu der jeweiligen Sektor-Spitze jedes Sektors wenigstens einer Gruppe der Sektoren, um einen Distanzvektor zu erhalten, der die Distanzen aus allen Sektoren wenigstens der Gruppe der Sektoren enthält;

c) Durchführen einer Fourier-Transformation des Distanzvektors zur Bildung eines ersten Fourier-Vektors $V=(v0,v1,...,vn-1)$; und

d) Ermitteln

d1) eines Zentrums der ringartigen Struktur

unter Verwendung der Komponente v1 des durch die Fourier-Transformation erhaltenen ersten Fourier-Vektors V.

2. Verfahren nach Anspruch 1,
**dadurch gekennzeichnet,**
**dass** der Schritt d) weiter umfasst:

Ermitteln

d2) eines Radius der ringartigen Struktur und/oder
d3) einer Abweichung der ringartigen Struktur von einer Kreisform aus dem durch die Fourier-Transformation erhaltenen ersten Fourier-Vektor.

3. Verfahren nach Anspruch 1 oder 2,
**dadurch gekennzeichnet,**
**dass** Schritt d) umfasst:

Ermitteln eines Ringradius der ringartigen Struktur aus der Fourier-Vektorkompenente $v_0$ oder aus der Fourier-Vektorkompenente $v_0$ und wenigstens einer der Fourier-Vektorkomponenenten $v_1$ und $v_2$, wobei vorzugsweise ein mittlerer Radius durch den Betrag $|v_0|$ der Fourier-Vektor-Kompenente $v_0$ bestimmt wird und durch wenigstens eine der weiteren Fourier-Vektor-Komponente korrigiert wird, und wobei vorzugsweise der Radius der ringartigen Struktur aus den Fourier-Vektor-Komponenten $v_0$, $v_1$ und $v_2$ errechnet wird durch:

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

4. Verfahren nach einem voranstehenden Ansprüche,
**dadurch gekennzeichnet,**
**dass** Schritt d) umfasst:

Ermitteln einer Ellipsität aus wenigstens einer Komponente des ersten Fourier-Vektors, wobei vorzugsweise die Ellipsität errechnet wird aus der Fourier-Vektor-Komponente $v_2$, und insbesondere in Form der numerischen Ellipsität $\varepsilon$ errechnet wird durch

$$\varepsilon = 2\sqrt{2\frac{|v_2|}{|v_0|}}.$$

5. Verfahren nach einem der voranstehenden Ansprüche,
**dadurch gekennzeichnet,**

**dass** das Verfahren durchgeführt wird:

- zur Erfassung von Längen- oder Wellenlängenänderung,
- an Bord eines Luftfahrzeuges zur Erfassung von Böen oder
- zur Bestimmung der Lageänderung von Objekten, die mit einem Ringmuster versehen sind, wobei das Ringmuster als Bild aufgenommen wird und einer entsprechenden Bildbearbeitung unterzogen wird, um die Lage des Ringmusters und damit die Lage des Objekts zu erfassen.

6. Vorrichtung (10) zur Bildverarbeitung von eine ringartige Struktur aufweisenden Intensitätsbildern zwecks Vermessung von Lage, Formabweichung und/oder Radius der ringartigen Struktur, insbesondere zur Auswertung von Interferogrammen und/oder zur genauen Ortsbestimmung von Objekten, umfassend:

   eine Sektorbildungseinheit (12) zum Definieren von N Sektoren des Intensitätsbildes mit jeweils an einem gemeinsamen, näherungsweise festgelegten Sektorursprungspunkt innerhalb der ringartigen Struktur liegenden Sektor-Spitzen, wobei N eine natürliche Zahl mit N>1 ist;
   eine Distanzerfassungseinheit (14) zum Erfassen einer Distanz eines Intensitätsextremums zu der jeweiligen Sektor-Spitze jedes Sektors wenigstens einer Gruppe der Sektoren, um einen Distanzvektor zu erhalten, der die Distanzen aus allen Sektoren wenigstens der Gruppe der Sektoren enthält;
   eine erste Fourier-Transformationseinheit (16) zum Durchführen einer Fourier-Transformation des Distanzvektors, um so einen ersten Fourier-Vektor V=(v0,v1,...,vn-1) zu erhalten; und
   eine Zentrumserfassungseinheit (18) zum Ermitteln eines Zentrums der ringartigen Struktur unter Verwendung der Komponente v1 des aus dem durch die Fourier-Transformation erhaltenen ersten Fourier-Vektors V.

7. Vorrichtung nach Anspruch 6,
   **dadurch gekennzeichnet,**
   **dass** die Vorrichtung weiter eine oder beide der folgenden Einheiten umfasst:

   - eine Radiuserfassungseinheit (20) zum Ermitteln eines Radius der ringartigen Struktur aus dem durch die Fourier-Transformation erhaltenen ersten Fourier-Vektor und/oder
   - einer Formabweichungserfassungseinheit (22) zum Erfassen einer Abweichung der ringartigen Struktur von einer Kreisform aus dem durch die Fourier-Transformation erhaltenen ersten Fourier-Vektor.

8. Vorrichtung nach Anspruch 6 oder 7,
   **dadurch gekennzeichnet,**
   **dass** die Radiuserfassungseinheit (20) zum Ermitteln eines Ringradius der ringartigen Struktur aus der Fourier-Vektorkompenente $v_0$ oder aus der Fourier-Vektorkompenente $v_0$ und wenigstens einer der Fourier-Vektorkompo-nenenten $v_1$ und $v_2$ ausgebildet ist, wobei vorzugsweise die Radiuserfassungseinheit (20) zum Bestimmen eines mittleren Radius durch den Betrag $|v_0|$ der Fourier-Vektor-Kompenente $v_0$ und zum Ermitteln des Radius durch Korrektur des mittleren Radius durch wenigstens eine der weiteren Fourier-Vektor-Komponenten ausgebildet ist, und wobei vorzugsweise die Radiuserfassungseinheit (20) ausgebildet ist zum Berechnen des Radius der ringartigen Struktur aus den Fourier-Vektor-Komponenten $v_0$, $v_1$ und $v_2$ durch:

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

9. Vorrichtung nach einem der Ansprüche 6 bis 8,
   **dadurch gekennzeichnet,**
   **dass** die Formabweichungserfassungseinheit (22) zum Ermitteln einer Ellipsität der ringartigen Struktur aus wenigstens einer Komponente des ersten Fourier-Vektors ausgebildet ist wobei vorzugsweise die Formabweichungserfassungseinheit (22) zum Errechnen der Ellipsität aus der Fourier-Vektor-Komponente $v_2$ ausgebildet ist und insbesondere zum Errechnen einer numerischen Ellipsität $\varepsilon$ durch

EP 2 356 413 B1

$$\varepsilon = 2\sqrt{2\frac{|v_2|}{|v_0|}}$$

ausgebildet ist.

**10.** Vorrichtung nach einem der Ansprüche 6 bis 9,
**dadurch gekennzeichnet,**
**dass** eine Kalibriereinheit (40) zur Kalibrierung der Vorrichtung aufgrund von Ausgangswerten der Zentrumerfassungseinheit (18), der Radiuserfassungseinheit (20) und/oder der Formabweichungserfassungseinheit (22) vorgesehen ist.

**11.** Vorrichtung nach einem der Ansprüche 6 bis 10,
**dadurch gekennzeichnet,**
**dass** sie (10) zur Verwendung

• zur Erfassung von Längen- oder Wellenlängenänderung,
• an Bord eines Luftfahrzeuges zur Erfassung von Böen oder
• zur Bestimmung der Lageänderung von Objekten, die mit einem Ringmuster versehen sind, wobei das Ringmuster als Bild aufgenommen wird und einer entsprechenden Bildbearbeitung unterzogen wird, um die Lage des Ringmusters und damit die Lage des Objekts zu erfassen,

ausgebildet ist.

## Claims

**1.** A method for image processing of intensity images having a ring-like structure for the purpose of measuring the position, shape deviation and/or radius of the ring-like structure, in particular for evaluating interferograms and/or for the exact localisation of objects, comprising the steps:

a) defining N sectors of the intensity image with sector tips that respectively lie at a common, approximately defined sector origin within the ring-like structure, with N being a natural number where N>1;
b) detecting a distance of an intensity extremum from the respective sector tip of each sector of at least one group of the sectors, in order to obtain a distance vector containing the distances from all sectors of at least the group of sectors;
c) performing a Fourier transform of the distance vector in order to generate a first Fourier vector V=(v0,v1,...,vn-1); and
d) determining

d1) a centre of the ring-like structure

using the component v1 of the first Fourier vector V obtained by means of the Fourier transform.

**2.** The method according to claim 1,
**characterised in that**
step d) further comprises:

determining

d2) a radius of the ring-like structure, and/or
d3) a deviation of the ring-like structure from a circular shape based on the first Fourier vector obtained by means of the Fourier transform.

**3.** The method according to claim 1 or 2,
**characterised in that**

16

step d) further comprises:

determining a ring radius of the ring-like structure based on the Fourier vector component $v_0$, or based on the Fourier vector component $v_0$ and at least one of the Fourier vector components $v_1$ and $v_2$, wherein, preferably, a mean radius is determined by the absolute value $|v_0|$ of the Fourier vector component $v_0$ and corrected by at least one of the further Fourier vector components, and wherein the radius of the ring-like structure is preferably calculated based on the Fourier vector components $v_0$, $v_1$ and $v_2$ by:

$$R(v_0, v_1, v_2) = |v_0| \bullet \left( 1 + \left( \frac{|v_1|}{|v_0|} \right)^2 + \left( \frac{|v_2|}{|v_0|} \right)^2 \right).$$

4. The method according to any one of the preceding claims,
   **characterised in that**
   step d) further comprises:

   determining an ellipsity based on at least one component of the first Fourier vector, wherein the ellipsity is preferably calculated based on the Fourier vector component $v_2$, and is calculated, in particular, in the form of the numerical ellipsity $\varepsilon$ by:

$$\varepsilon = 2 \sqrt{ 2 \frac{|v_2|}{|v_0|} }.$$

5. The method according to any one of the preceding claims, **characterised in that**
   the method is carried out:

   • for detecting changes in length and wave length,
   • on board an aircraft for detecting gusts, or
   • for determining the change in position of objects provided with a ring pattern, the ring pattern being recorded as an image and being subjected to a corresponding image editing process in order to detect the position of the ring pattern, and thus the position of the object.

6. A device (10) for image processing of intensity images having a ring-like structure for the purpose of measuring the position, shape deviation and/or radius of the ring-like structure, in particular for evaluating interferograms and/or for the exact localisation of objects, comprising:

   a sector forming unit (12) for defining N sectors of the intensity image with sector tips that respectively lie at a common, approximately defined sector origin within the ring-like structure, with N being a natural number where N>1;
   a distance detecting unit (14) for detecting a distance of an intensity extremum from the respective sector tip of each sector of at least one group of the sectors,
   in order to obtain a distance vector containing the distances from all sectors of at least the group of sectors;
   a first Fourier transform unit (16) for performing a Fourier transform of the distance vector in order thus to obtain a first Fourier vector V=(v0,v1,...,vn-1); and
   a centre detection unit (18) for determining a centre of the ring-like structure using the component v1 of the first Fourier vector V obtained by means of the Fourier transform.

7. The device according to claim 6,
   **characterised in that**
   the device further comprises one or both of the following units:

   • a radius detection unit (20) for determining a centre of the ring-like structure from the first Fourier vector obtained by means of the Fourier transform, and/or
• a shape deviation detection unit (22) for detecting a deviation of the ring-like structure from a circular shape based on the first Fourier vector obtained by the Fourier transform.

**8.** The device according to claim 6 or 7,
**characterised in that**
the radius detection unit (20) is configured for determining a ring radius of the ring-like structure based on the Fourier vector component $v_0$, or based on the Fourier vector component $v_0$ and at least one of the Fourier vector components $v_1$ and $v_2$, wherein, preferably, the radius detection unit (20) is configured for determining a mean radius by the absolute value $|v_0|$ of the Fourier vector component $v_0$ and for determining the radius by correction of the mean radius by at least one of the further Fourier vector components, and the radius detection unit (20) is preferably configured for calculating the radius of the ring-like structure based on the Fourier vector components $v_0$, $v_1$ and $v_2$ by:

$$R(v_0, v_1, v_2) = |v_0| \bullet \left( 1 + \left( \frac{|v_1|}{|v_0|} \right)^2 + \left( \frac{|v_2|}{|v_0|} \right)^2 \right).$$

**9.** The device according to any one of the claims 6 to 8,
**characterised in that**
the shape deviation detection unit (22) is configured for determining an ellipsity of the ring-like structure based on at least one component of the first Fourier vector, wherein the shape deviation detection unit (22) is preferably configured for calculating the ellipsity based on the Fourier vector component $v_2$, and in particular configured for calculating a numerical ellipsity $\varepsilon$ by:

$$\varepsilon = 2 \sqrt{2 \frac{|v_2|}{|v_0|}}.$$

**10.** The device according to any one of the claims 6 to 9,
**characterised in that**
a calibrating unit (40) for calibrating the device based on initial values obtained by the centre detection unit (18), the radius detection unit (20) and/or the shape deviation detection unit (22) is provided.

**11.** The device according to any one of the claims 6 to 10,
**characterised in that**
that it (10) is configured for being used

• for detecting changes in length and wave length,
• on board an aircraft for detecting gusts, or
• for determining the change in position of objects provided with a ring pattern, the ring pattern being recorded as an image and being subjected to a corresponding image editing process in order to detect the position of the ring pattern, and thus the position of the object.

**Revendications**

**1.** Procédé pour le traitement par imagerie d'images d'intensité présentant une structure de type annulaire dans le but de mesurer la position, l'écart de forme et/ou le rayon de la structure de type annulaire, en particulier pour l'évaluation d'interférogrammes et/ou pour la détermination exacte de la localisation d'objets, comportant les étapes consistant à :

a) définir N secteurs de l'image d'intensité comportant des sommets de secteurs situés respectivement en un point d'origine de secteur, déterminé de façon approximative à l'intérieur de la structure de type annulaire, N étant un nombre naturel tel que N > 1 ;
b) détecter une distance d'un extremum d'intensité jusqu'à la pointe de secteur respective de chaque secteur d'au moins un groupe de secteurs, afin d'obtenir un vecteur de distance qui contient les distances de tous les secteurs dudit au moins un groupe de secteurs ;

c) exécuter une transformation de Fourier du vecteur de distance pour former un premier vecteur de Fourier V = $(v_0, v_1, .... v_{n-1})$; et

d) déterminer

   d1) un centre de la structure de type annulaire en utilisant la composante $v_1$ du premier vecteur de Fourier V obtenu par la transformation de Fourier.

2. Procédé selon la revendication 1,
   **caractérisé en ce que** l'étape d) comprend en outre l'opération consistant à déterminer

   d2) un rayon de la structure de type annulaire, et/ou
   d3) un écart de la structure de type annulaire vis-à-vis d'une forme circulaire

   à partir du premier vecteur de Fourier obtenu par la transformation de Fourier.

3. Procédé selon la revendication 1 ou 2,
   **caractérisé en ce que** l'étape d) comprend l'opération consistant à déterminer un rayon de l'anneau de la structure de type annulaire à partir de la composante $v_0$ du vecteur de Fourier ou à partir de la composante $v_0$ du vecteur de Fourier et d'au moins l'une des composantes $v_1$ et $v_2$ du vecteur de Fourier, dans lequel on détermine de préférence un rayon moyen à l'aide de la valeur $|v_0|$ de la composante $v_0$ du vecteur de Fourier et on le corrige à l'aide d'au moins une autre composante du vecteur de Fourier, et dans lequel on calcule de préférence le rayon de la structure de type annulaire à partir des composantes $v_0$, $v_1$ et $v_2$ du vecteur de Fourier par la formule :

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

4. Procédé selon l'une des revendications précédentes,
   **caractérisé en ce que** l'étape d) comprend l'opération consistant à :

   déterminer une ellipsité à partir d'au moins une composante du premier vecteur de Fourier, dans lequel on calcule de préférence l'ellipsité à partir de la composante $v_2$ du vecteur de Fourier, et en particulier sous la forme de l'ellipsité numérique $\varepsilon$, par la formule :

$$\varepsilon = 2\sqrt{2 \frac{|v_2|}{|v_0|}}.$$

5. Procédé selon l'une des revendications précédentes,
   **caractérisé en ce que** le procédé est exécuté :

   - pour déterminer des variations de longueur ou des variations de longueur d'onde,
   - à bord d'un aéronef pour détecter des rafales, ou
   - pour déterminer la variation de position d'objets qui sont dotés d'un motif annulaire, tel que le motif annulaire est enregistré sous forme d'image et soumis à un traitement d'imagerie correspondant afin de détecter la position du motif annulaire et ainsi la position de l'objet.

6. Dispositif pour le traitement par imagerie d'images d'intensité présentant une structure de type annulaire dans le but de mesurer la position, l'écart de forme et/ou le rayon de la structure de type annulaire, en particulier pour l'évaluation d'interférogrammes et/ou pour la détermination exacte de la localisation d'objets, comprenant :

une unité de formation de secteurs (12) pour définir N secteurs de l'image d'intensité comportant des sommets de secteurs situés respectivement en un point d'origine de secteur, déterminé de façon approximative à l'intérieur de la structure de type annulaire, N étant un nombre naturel tel que N > 1 ;

une unité de détection de distance (14) pour détecter une distance d'un extremum d'intensité jusqu'à la pointe de secteur respective de chaque secteur d'au moins un groupe de secteurs, afin d'obtenir un vecteur de distance qui contient les distances de tous les secteurs dudit au moins un groupe de secteurs ;

une première unité de transformation de Fourier (16) pour exécuter une transformation de Fourier du vecteur de distance, afin d'obtenir ainsi un premier vecteur de Fourier $V = (v_0, v_1, ..., v_{n-1})$ ; et

une unité de détection de centre (18) pour déterminer un centre de la structure de type annulaire en utilisant la composante $v_1$ du premier vecteur de Fourier V obtenu par la transformation de Fourier.

7. Dispositif selon la revendication 6,
**caractérisé en ce que** le dispositif comprend en outre l'une des unités suivantes ou les deux :

- une unité de détection de rayon (20) pour déterminer un rayon de la structure de type annulaire à partir du premier vecteur de Fourier obtenu par la transformation de Fourier, et/ou
- une unité de détection d'écart de forme (22) pour détecter un écart de la structure de type annulaire vis-à-vis d'une forme circulaire à partir du premier vecteur de Fourier obtenu par la transformation de Fourier.

8. Dispositif selon la revendication 6 ou 7,
**caractérisé en ce que**
l'unité de détection de rayon (20) est réalisée pour déterminer un rayon annulaire de la structure de type annulaire à partir de la composante $v_0$ du vecteur de Fourier ou bien à partir de la composante $v_0$ du vecteur de Fourier et de l'une au moins des composantes $v_1$ et $v_2$ du vecteur de Fourier, dans lequel l'unité de détection de rayon (20) est de préférence réalisée pour déterminer un rayon moyen à l'aide de la valeur $|v_0|$ de la composante $v_0$ du vecteur de Fourier et pour déterminer le rayon par correction du rayon moyen à l'aide de l'une au moins des autres composantes du vecteur de Fourier, et dans lequel de préférence l'unité de détection de rayon (20) est réalisée pour calculer le rayon de la structure de type annulaire à partir des composantes $v_0$, $v_1$ et $v_2$ du vecteur de Fourier par la formule

$$R(v_0, v_1, v_2) = |v_0| \cdot \left( 1 + \left( \frac{|v_1|}{|v_0|} \right)^2 + \left( \frac{|v_2|}{|v_0|} \right)^2 \right).$$

9. Dispositif selon l'une des revendications 6 à 8,
**caractérisé en ce que**
l'unité de détection d'écart de forme (22) est réalisée pour déterminer une ellipsité de la structure de type annulaire à partir d'au moins une composante du premier vecteur de Fourier, et **en ce que** de préférence l'unité de détection d'écart de forme (22) est réalisée pour calculer l'ellipsité à partir de la composante $v_2$ du vecteur de Fourier et en particulier pour calculer une ellipsité numérique $\varepsilon$ par la formule

$$\varepsilon = 2 \sqrt{2 \frac{|v_2|}{|v_0|}}.$$

10. Dispositif selon l'une des revendications 6 à 9,
**caractérisé en ce qu'**il est prévu une unité de calibrage (40) pour calibrer le dispositif au moyen de valeurs de départ de l'unité de détection de centre (18), de l'unité de détection de rayon (20) et/ou de l'unité de détection d'écart de forme (22).

11. Dispositif selon l'une des revendications 6 à 10,
**caractérisé en ce qu'**il est réalisé pour être utilisé

- pour déterminer des variations de longueur ou des variations de longueur d'onde,

- à bord d'un aéronef pour détecter des rafales, ou
- pour déterminer la variation de position d'objets qui sont dotés d'un motif annulaire, ledit motif annulaire étant enregistré sous forme d'image et soumis à un traitement d'imagerie correspondant afin de détecter la position du motif annulaire et ainsi la position de l'objet.

**Fig. 1**

**Fig. 2**

**Fig. 4**

**Fig. 3**

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006030399 B3

- WO 2004092767 A1
- DE 2006030399 B3